# FASCICULE DE BREVET EUROPEEN

(11) **EP 2 604 158 B1**
(45) Date de publication et mention de la délivrance du brevet: **18.06.2014**
(21) Numéro de dépôt: 12196381.3
(22) Date de dépôt: 10.12.2012
(51) Int. Cl.: A47J 37/06

(54) **Appareil électrique de cuisson**
Elektrisches Kochgerät
Electric cooking appliance

(30) Priorité: 16.12.2011 FR 1161828
(43) Date de publication de la demande: 19.06.2013
(73) Titulaire: SEB S.A., 69130 Ecully (FR)
(72) Inventeur: Robin, Jean-Philippe, 74570 GROISY (FR)
(74) Mandataire: Cémeli, Eric Philippe Laurent

(56) Documents cités:
- DE-A1- 2 504 678
- US-A1- 2005 247 210
- US-A1- 2006 213 373
- US-A1- 2010 199 858

## Description

La présente invention concerne un appareil électrique de cuisson composé d'un support et d'un dispositif de cuisson, monté sur ce support. L'appareil électrique de cuisson comprend plus particulièrement un plateau récupérateur de résidus alimentaires et des moyens pour stocker le plateau récupérateur de résidus alimentaires lorsque l'appareil électrique de cuisson est en position de stockage.

On connaît un appareil électrique de cuisson comprenant, d'une part un support, un dispositif de cuisson, appelé gaufrier, un plateau récupérateur de résidus alimentaires, et d'autre part un dispositif de stockage du plateau adapté à stocker le plateau lorsque l'appareil électrique de cuisson est en position de stockage. Habituellement et de manière évidente, le plateau se trouve sous le gaufrier lors d'une utilisation de l'appareil électrique de cuisson.

Le gaufrier comprend un panneau supérieur et un panneau inférieur articulés entre eux par une charnière entre une position ouverte et une position fermée. Le gaufrier est monté pivotant sur le support autour d'un axe de révolution entre au moins une position angulaire de manoeuvre et une position angulaire de stockage.

Un tel appareil électrique de cuisson est décrit dans le brevet US 2010/0199858, dans lequel l'appareil électrique de cuisson comprend un dispositif de cuisson, appelé gaufrier, un support destiné à supporter le gaufrier, un plateau récupérateur de résidus alimentaires et un dispositif mécanique pour stocker le plateau lorsque l'appareil électrique de cuisson est en position de stockage. Le gaufrier est agencé de manière à former un double gaufrier formant une chambre de cuisson.

Le support est composé d'un socle et de au moins deux pieds qui sont positionnés sur ce socle et qui sont disposés de part et d'autre du socle.
Le document présente une solution de stockage du plateau récupérateur de résidus alimentaires lorsque l'appareil électrique de cuisson est dans sa position de stockage. La solution de stockage dévoilée consiste en une rainure effectuée dans le support de l'appareil électrique de cuisson. Cette rainure est positionnée sur la face supérieure du socle, et est orientée dans la même direction que l'axe de rotation du gaufrier. Elle est positionnée de préférence sur les bords du socle, à une distance suffisante du centre du socle, pour que le gaufrier, en position de stockage, ne coupe pas la normale à cette rainure. Cette condition est nécessaire car cette rainure est conçue pour que le plateau puisse y être inséré verticalement. De manière courante le plateau a une forme sensiblement rectangulaire. L'utilisateur doit, une fois le gaufrier mis dans sa position de stockage, et pour stocker le plateau, insérer un bord dans cette rainure. La longueur de la rainure doit être sensiblement supérieure à la longueur de ce bord afin que celui-ci puisse y être inséré. De la même façon, cette rainure a une largeur sensiblement supérieure à l'épaisseur de ce bord du plateau et la profondeur de la rainure doit être suffisante pour que le plateau soit correctement maintenu.

Le document divulgue également d'autres positions de la rainure.
Dans un autre cas de figure, il y a deux rainures et elles sont positionnées sur les pieds, précisemment sur la face intérieure de chaque pied. Elles sont également excentrées du centre des pieds pour la même raison que celle précédemment évoquée et elles sont orientées du haut vers le bas. Dans ce cas précis, ce sont deux bords opposés du plateau qui viennent coulisser dans ces rainures qui servent de guide et de maintien du plateau. Le plateau est, dans ce cas de figure, maintenu sur deux de ses bords.

Une combinaison des deux dispositions précédentes est également possible. Dans cette combinaison, lorsque le plateau est stocké dans le support, deux bords opposés du plateau pénètrent donc dans les rainures des pieds prévus à cet effet et la rainure positionnée sur le socle accueille également un des bords du plateau. Dans cette configuration le plateau est maintenu sur trois de ses bords.

Ce document décrit également une solution de stockage indépendante des rainures et où une protubérance femelle, centrée sur le milieu du plateau est conçue pour se positionner et s'accrocher sur une protubérance mâle positionnée sur le gaufrier. Cette protubérance mâle, plus grande que la protubérance femelle, est située sur une des faces du gaufrier, de manière à ce que lorsque ces deux protubérances se chevauchent, l'action mécanique exercée par la protubérance mâle sur la protubérance femelle, couplée à la réaction de frottement, permet de maintenir le plateau contre la face du gaufrier dans la position de stockage de l'appareil électrique de cuisson.

Toutefois, dans un tel appareil électrique de cuisson, le stockage du plateau nécessite une certaine manipulation par l'utilisateur lorsque celui-ci souhaite stocker l'appareil électrique de cuisson. Cette manipulation peut s'avérer compliquée lorsque les éléments mécaniques du dispositif de stockage sont altérés. Ainsi, si une déformation mécanique intervient sur les protubérances citées ci-dessus, le risque qu'il peut y avoir est que le plateau peut ne plus adhérer mécaniquement au gaufrier, ce qui dans ce cas de figure, rend cette solution de stockage inutile et encombrante. De la même manière si lors d'une mauvaise manipulation du plateau, celui se trouve déformé, il peut s'avérer difficile pour l'utilisateur de faire coulisser les bords du plateau dans les rainures prévues à cet effet sur les pieds; en effet les bords du plateau n'étant plus parfaitement rectilignes, ceux-ci peuvent ne plus coulisser exactement dans les rainures prévues pour les accueillir. L'utilisateur est, dans ce cas de figure, obligé de forcer mécaniquement sur le plateau pour le faire coulisser et ainsi arriver à la position de stockage de l'appareil électrique de cuisson. De même, la solution proposée dans le document cité, qui consiste à insérer un seul bord du plateau dans une rainure disposée dans le socle, présente le risque d'une rupture mécanique, soit d'un élément du plateau soit d'un élément du socle proche de la rainure. Cette rupture peut intervenir lors d'une mauvaise manipulation par l'utilisateur. Par exemple, dans le cas où l'utilisateur appuie sur le plateau lorsque celui-ci est en position de stockage, les forces de pression sont seulement réparties le long de la rainure positionnée sur le socle, ce qui dans certains cas peut conduire à une rupture mécanique comme précisé précédemment.

Un autre inconvénient lié à un tel dispositif de stockage, réside dans le fait que, bien que le plateau soit fait pour récolter les chutes des résidus alimentaires du gaufrier, il se peut que lors de l'enlèvement du plateau, certains résidus tombent et aillent se loger dans les rainures prévues pour stocker le plateau. Ce qui a pour effet de compliquer le nettoyage d'un tel dispositif.

Le but de la présente invention est de remédier aux inconvénients précités et de proposer un appareil électrique de cuisson du type précité, de construction simple, disposant d'un dispositif de stockage du plateau simple à l'usage et robuste de construction.

Un autre but de l'invention est de faciliter la phase de nettoyage de l'appareil électrique de cuisson lorsque celui-ci est sali après une utilisation, grâce notamment à l'absence d'aspérités mécaniques ou de rainures susceptibles d'entraver cette phase de nettoyage ou même de conserver certains résidus alimentaires.

Un autre but de l'invention est de proposer une solution qui soit moins susceptible de dégradation mécanique dans le temps, en supprimant les points d'accroche susceptibles d'être fragilisés et donc de se rompre lors d'une mauvaise manipulation par l'utilisateur.

Ces buts sont réalisés à l'aide d'un appareil électrique de cuisson comportant un support, et un dispositif de cuisson, appelé gaufrier et monté sur le support, selon au moins une positon de stockage et une position de manoeuvre.
Le gaufrier comprend un panneau supérieur et un panneau inférieur articulés entre eux par une charnière entre une position ouverte et une position fermée.
Le gaufrier comprend également d'une part, un plateau de récupération des résidus alimentaires et d'autre part des moyens de maintien du plateau sur le panneau inférieur du gaufrier, lorsque le gaufrier est en position de stockage sur son support.

Les moyens de maintien sont des moyens magnétiques qui génèrent une force magnétique de rappel sensiblement supérieure au poids du plateau et ceci dans le but de maintenir le plateau contre le panneau inférieur du gaufrier.

De façon avantageuse, on comprendra que ces moyens magnétiques sont formés par au moins deux éléments aimantés permanents dont un au moins de ces éléments aimantés permanents est disposé de préférence dans la partie basse du panneau inférieur du gaufrier.

De façon avantageuse, un ou plusieurs éléments aimantés, disposés dans la partie basse du panneau inférieur du gaufrier, sont disposés dans des logements agencés dans la partie basse du panneau inférieur du dispositif gaufrier de sorte que ces éléments aimantés ont leurs moments dipolaires sensiblement parallèles à la normale au plan d'une enveloppe adaptée à recouvrir la partie basse du panneau inférieur du gaufrier.

De manière avantageuse les éléments aimantés permanents disposés dans des logements sont recouverts par l'enveloppe.

Alternativement des ouvertures sont prévues sur l'enveloppe, en vis à vis des logements, laissant apparent la partie extérieure des aimants.

De manière avantageuse l'enveloppe de la partie basse du gaufrier est conçue avec une matière formant un aimant permanent.

Avantageusement le plateau de récupération est conçu avec une matière formant un aimant permanent.

Alternativement le plateau de récupération est conçu dans une matière plastique et comporte des éléments aimantés.

Avantageusement le support comporte un dispositif prévu pour maintenir le plateau récupérateur dans une position horizontale au plan de travail, lors d'une utilisation de l'appareil électrique de cuisson.

Avantageusement ce dispositif de maintien comporte au moins une protubérance positionnée sur le socle ou sur la partie basse des pieds.

De façon alternative, ces protubérances comportent des aimants permanents servant au meilleur maintien du plateau lors d'une position d'utilisation.

Avantageusement le plateau de récupération a des bords extérieurs sensiblement plus hauts que son centre.

Alternativement, le dispositif pour maintenir horizontalement le plateau lors d'une utilisation de l'appareil électrique de cuisson est composé d'une ou plusieurs saillies qui sont positionnées sur les faces intérieures des pieds et qui s'étendent préférentiellement de part et d'autre du pied de facon sensiblement horizontale.

Plus particulièrement les éléments aimantés qui peuvent être utilisés sont soit des aimants permanents naturels, soit des aimants permanents artificiels comme l'acier trempé de baryum.

D'autres avantages et particularités apparaîtront dans la description du mode de réalisation qui est illustrée par les dessins mis en annexe et qui n'est donnée qu'à titre d'exemple non limitatif.

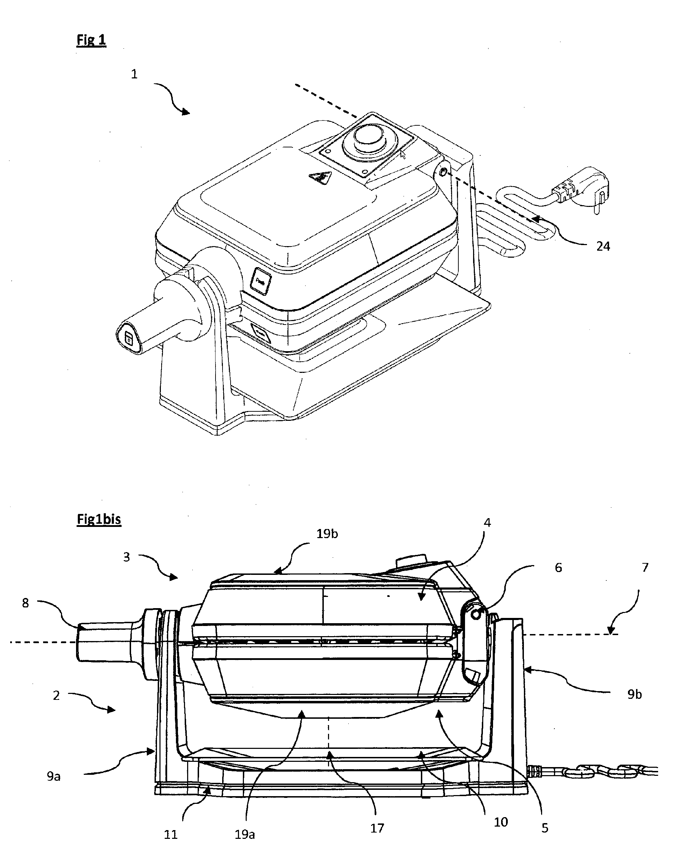

La figure 1 est une vue en perspective d'un appareil électrique de cuisson conforme à la présente invention ; le dispositif est fermé et en position de manoeuvre ; et
La figure 1 bis est une vue latérale de l'appareil électrique de cuisson conforme à la présente invention ; et
La figure 2 est une vue en perspective du support seul conforme à la présente invention ;
La figure 3 est une vue en coupe longitudinale d'un appareil électrique de cuisson conforme à la présente invention, dans sa position d'utilisation ou de manoeuvre.
La figure 4 est une vue de face d'un appareil électrique de cuisson conforme à la présente invention dans sa position de stockage.
La figure 5 est une vue extraite du plateau récupérateur de résidus alimentaires conforme à l'invention.
La figure 6 est une vue en coupe, selon la figure 3, du panneau inférieur et du support de l'appareil électrique de cuisson conforme à l'invention et où l'appareil est en position de manoeuvre.
La figure 7 est une vue en coupe, selon la figure 3, du panneau inférieur et du support de l'appareil électrique de cuisson dans un mode de réalisation.
La figure 8 est une vue du panneau inférieur du support de l'appareil électrique de cuisson et du plateau récupérateur de résidus dans un mode de réalisation.

Un premier mode de réalisation de l'invention va, à présent, être décrit en référence aux figures 1 à 6.

Comme on peut le voir sur les figures 1 et 1bis, un appareil électrique de cuisson (1) comporte un support (2) et un dispositif (3) du type gaufrier, ci après désigné par gaufrier (3).

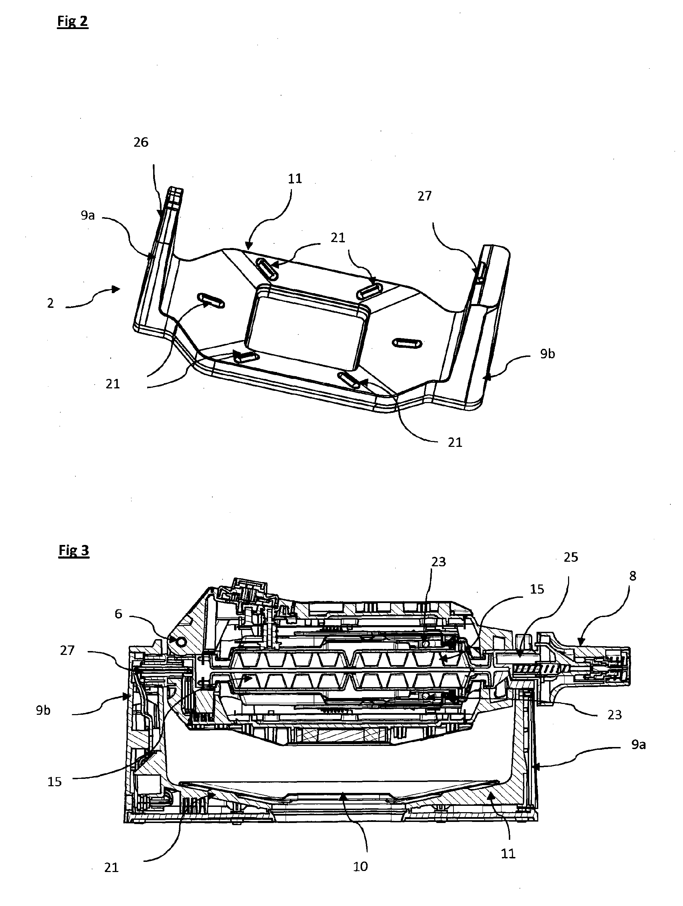

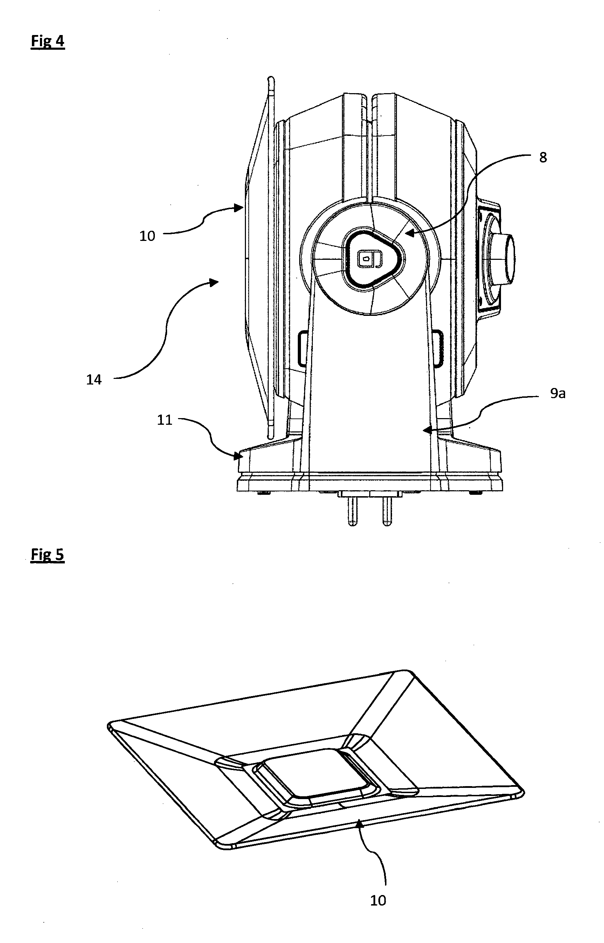

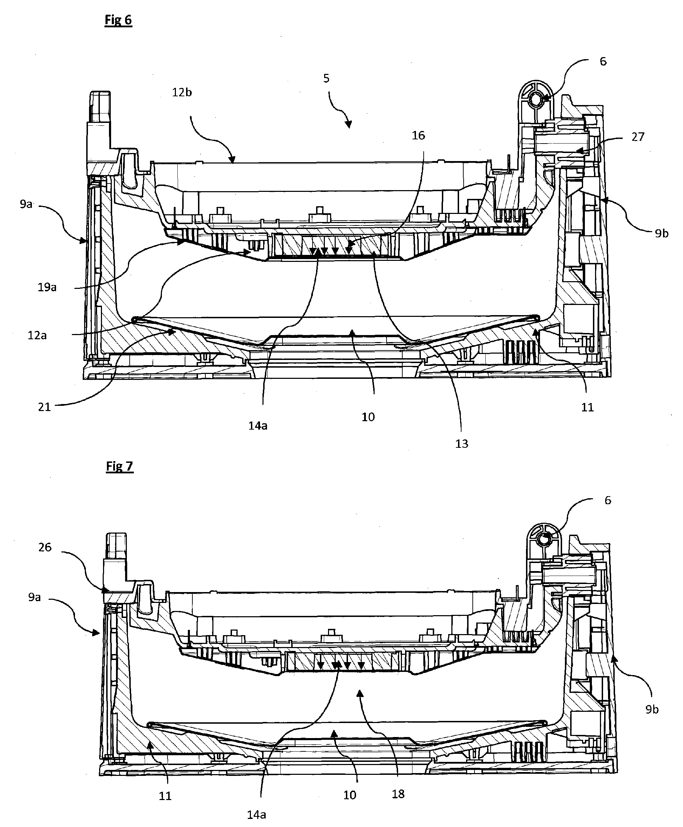

Le gaufrier (3) comprend deux panneaux (4, 5) qui sont articulés entre eux par une charnière (6) entre une position ouverte et une position fermée. Le gaufrier (3) est monté pivotant sur le support (2) autour d'un axe de révolution (7) entre au moins une position angulaire de manoeuvre dans laquelle l'axe (24) de la charnière (6) est orienté horizontalement et dans laquelle le panneau supérieur (4) est au-dessus du panneau inférieur (5) quand ils sont en position fermée (figures 1 et 2), et une seconde position angulaire retournée dans laquelle l'axe (24) de la charnière (6) est orienté horizontalement, le panneau supérieur (4) étant au-dessous du panneau inférieur (5) quand ils sont en position fermée. L'axe (24) de la charnière (6) est perpendiculaire à l'axe de révolution (7). Entre la position de manoeuvre et la position retournée, il y a un décalage d'un demi-tour. On peut aussi imaginer une variante dans laquelle les positions du gaufrier (3) sont discrètisées et au moins au nombre de deux, à savoir une position de manoeuvre et une position de stockage et des positions intérmédiaires. Comme on peut le voir sur la figure 4, la position de stockage est obtenue par une rotation de 90° du gaufrier (3) suivant l'axe de révolution (7), à partir de la position où le gaufrier (3) est dans sa position angulaire de manoeuvre comme montré sur les figures 1 et 2.
En référence à la figure 6, le panneau inférieur (5) peut se diviser en une partie basse et une partie haute (12a, 12b), et comprend une enveloppe ou coque (19a) qui recouvre la partie basse (12a). De la même manière, le panneau supérieur (4) est recouvert par une enveloppe (19b).
Classiquement et en référence à la figure 3, on trouve dans les panneaux inférieurs et supérieurs (4, 5) du gaufrier (3), des plaques de cuisson (15) qui sont adaptées à recevoir la nourriture à cuire, et des résistances électriques (23) qui sont destinées à chauffer les plaques de cuisson (15) du gaufrier (3). Les plaques de cuisson (15) sont amovibles, permettant ainsi leur extraction des panneaux (4, 5).
En référence à la figure 2, le support (2) comprend un premier et un deuxième appui (9a, 9b) dressés depuis un socle inférieur (11) et sur lesquels le dispositif gaufrier (3) est monté pivotant, à deux extrémités opposées.
Le gaufrier (3) comprend une unique poignée (8) située au bout d'un bras (25) reliée au panneau supérieur (4) et s'étendant à une seulement desdites extrémités, à l'opposé de la charnière (6) située sur le premier appui (9b).
En référence aux figures 2, 3 et 5, l'appareil électrique de cuisson (1) comprend, à l'endroit du socle (11), un plateau de récupération (10) des résidus alimentaires qui s'étend sous le gaufrier (3) et qui est adapté à recevoir des résidus tombant de ce dernier. Ces résidus sont divers mais on comprendra qu'ils sont prinicipalement d'ordre alimentaire. Le support (2) comprend un palier avant (26) qui est situé à l'opposé de la charnière (6), et un palier arrière (27) qui est situé du côté de la charnière (6), les deux paliers (26, 27) sont alignés selon l'axe de révolution (7) et servent de support au gaufrier (3). Bien évidemment, les deux paliers (26, 27) sont situés suffisamment au dessus de la plaque de récupération (10) pour que le gaufrier (3) puisse pivoter librement autour de l'axe de révolution (7) et respectivement sur les appuis (9a, 9b).

Le gaufrier (3) comprend un pivot avant qui est situé à l'opposé de la charnière (6) et qui est monté libre en rotation dans le palier avant (26), et un pivot arrière qui est situé du côté de la charnière (6) et qui est monté libre en rotation dans le palier arrière (27).
Ainsi, les deux pivots s'étendent le long de l'axe de révolution (7) et forment l'arbre de rotation autour duquel pivote le gaufrier (3).
Des protubérances (21) disposées sur le socle (11) permettent de maintenir le plateau (10) dans une position sensiblement parralèle au socle (11) lorsque l'appareil (1) est en position de manoeuvre.
La figure 5 représente le plateau (10) selon l'invention. De manière générale mais non limitative, le plateau (10) est de forme rectangulaire ou carrée et les bords de celui-ci sont légèrement plus haut que le centre du plateau (10) de manière à faire converger l'ensemble des résidus vers le centre du plateau(10). Comme indiqué sur la figure 5, le plateau (10) est embouti rectangulairement au centre du plateau (10).
On pourrait dans une variante imaginer un plateau de forme circulaire, hexagonale ou triangulaire.
La figure 4 représente l'appareil électrique (1) dans son mode de stockage où l'axe (24) de la charnière (6) est normal au plan formé par le socle (11). On obtient ce mode de stockage par une rotation de 90° du dispositif (3) gaufrier suivant l'axe de révolution (7). Cette rotation d'un angle de 90° du dispositif (3) gaufrier peut se faire aussi bien dans le sens des aiguilles d'une montre que dans le sens inverse des aiguilles d'une montre, suivant l'axe de révolution (7). Ainsi dans ce mode de stockage de l'appareil électrique de cuisson (1), le plateau (10) vient prendre place sur le côté du dispositif (3) gaufrier. En position de stockage, le plateau (10) se retrouve donc perpendiculaire au socle (11). Des moyens (14) magnétiques, composés d'éléments magnétiques distincts, permettent de maintenir le plateau (10) dans une telle position. Dans la présente invention ces éléments magnétiques distincts peuvent être un aimant (14a) et le plateau (10).
Plus particulièrement selon ce premier mode de réalisation de l'invention, un logement (13) est arrangé dans la partie basse (12a) du panneau inférieur (5) afin de recevoir un premier élément magnétique (14a). La figure 6 illustre la façon dont ce logement (13) est conçu et positionné dans la partie basse (12a). Le logement (13) est ici une cavité de forme sensiblement rectangulaire. On comprendra d'après la figure 6, qui est un agrandissement des éléments de l'appareil électroménager se trouvant sous l'axe de révolution (7), que le logement (13), qui se situe dans la partie basse (12a) du panneau inférieur (5) est au centre de celle-ci.
L'élément magnétique (14a) prévu pour rentrer dans ce logement (13) a donc une forme sensiblement identique à la forme de ce logement (13) de telle sorte que les moments magnétiques (16) de l'élément magnétique (14a) soient préférentiellement normaux à la normale (17) de l'enveloppe (19a).
Il est toutefois possible d'imaginer d'autres logements qui seraient, en complément ou en remplacement du logement initial (13), excentrés sur la partie basse (12a) ; ces logements pouvant contenir des éléments magnétiques.
Dans ce cas précis de réalisation, l'enveloppe (19a) du panneau inférieur (5) vient recouvrir l'ouverture (18) du logement (13) dans lequel se trouve l'élément magnétique (14a). Dans ce mode de réalisation cet élément magnétique (14a) est un aimant permanent.

Dans le mode de réalisation décrit, le second élément magnétique discret des moyens (14) magnétiques est le plateau (10) qui est lui même constitué par une matière aimantée de telle sorte que lorsque l'utilisateur approche ledit plateau (10) aimanté du logement (13) où se trouve l'aimant permanent (14a), la force magnétique produite par chaque élément aimanté tend à assurer un contact et un maintien des deux éléments aimantés des moyens (14) magnétiques. Le plateau (10) se trouve donc maintenu contre la partie basse (12a) du gaufrier (3).

Un autre mode de réalisation selon l'invention, visible sur la figure 7, prévoit que l'enveloppe (19a) du panneau inférieur (5) ne vient pas recouvrir le logement (13). Une ouverture (18) est ainsi créée dans l'enveloppe (19a). L'utilité de cette ouverture (18) est d'établir un contact direct entre au moins deux éléments aimantés des moyens (14) magnétiques.

Alternativement, le plateau (10) peut être fait dans un matériau quelconque n'ayant pas des propriétés d'aimant permanent. Dans ce cas, l'ajout d'éléments magnétiques sur ou au-dessous du plateau sera nécessaire dans le cadre de l'invention.

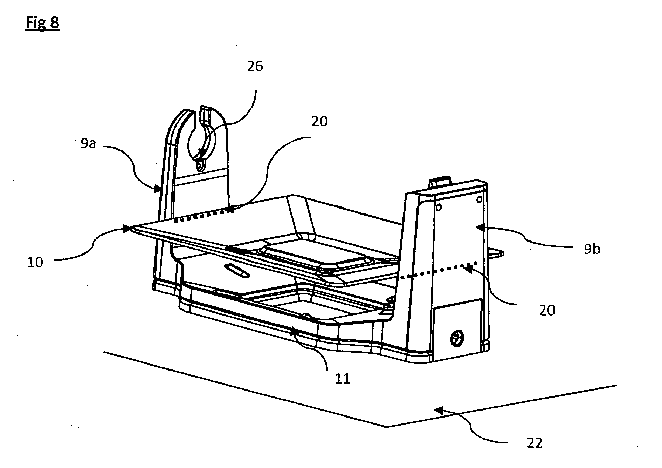

Un autre mode de réalisation, visible sur la figure 8, prévoit également un dispositif alternatif pour le positionnement du plateau (10) lors de l'utilisation de l'appareil (1) ou ledit plateau (10) est positionné sur des saillies (20) disposées sur la face intérieure des pieds (9a, 9b). Ces saillies (20) peuvent comporter des aimants afin de renforcer le maintien du plateau (10).
Ces saillies (20) sont des lignes continues ou des protubérances discrètisées.

Bien évidemment, la présente invention n'est pas limitée au mode de réalisation qui vient d'être décrit et peut s'appliquer à d'autres types d'appareils.

## Revendications

1. Appareil électrique de cuisson (1) comportant d'une part un support (2), un dispositif (3) gaufrier monté sur le support (2) selon au moins une position de stockage et une position de manoeuvre, le dispositif gaufrier comprend un panneau supérieur (4) et un panneau inférieur (5) articulés entre eux par une charnière (6) entre une position ouverte et une position fermée, un plateau de récupération (10) de résidus et d'autre part des moyens de maintien du plateau de récupération (10) sur le panneau inférieur (5) lorsque le dispositif gaufrier est en position de stockage sur son support, **caractérisé en ce que** les moyens de maintien sont des moyens magnétiques (14) qui génèrent une force de rappel suffisante pour maintenir le plateau récupérateur (10) au panneau inférieur (5) du dispositif (3) gaufrier.

2. Appareil électrique de cuisson (1) selon la revendication 1, **caractérisé en ce que** les moyens (14) magnétiques comprennent au moins deux éléments aimantés permanents.

3. Appareil électrique de cuisson (1) selon la revendication 2 , **caractérisé en ce que** les éléments aimantés sont soit des aimants permanents naturels soit des aimants permanents artificiels comme l'acier trempé de baryum.

4. Appareil électrique de cuisson (1) selon les revendications 2 et 3, **caractérisé en ce que** l'un au moins des deux éléments aimantés permanents est disposé dans la partie basse (12a) du panneau inférieur (5) du dispositif (3) gaufrier.

5. Appareil électrique de cuisson (1) selon la revendication précédente, **caractérisé en ce que** un ou plusieurs éléments aimantés disposés dans la partie basse (12a) du panneau inférieur (5) du dispositif (3) gaufrier sont disposés dans des logements (13) agencés dans ladite partie basse (12a) du panneau inférieur (5) du dispositif (3) gaufrier de manière à ce que, une fois les éléments aimantés permanents disposés dans les logements (13), leurs moments dipolaires (16) soient sensiblement parallèles à la normale (17) au plan de la partie basse (12a) du panneau inférieur (5) du dispositif (3) gaufrier.

6. Appareil électrique de cuisson (1) selon la revendication précédente, **caractérisé en ce que** les éléments aimantés permanents disposés dans des logements (13) sont recouverts par une enveloppe (19a) de la partie basse (12a).

7. Appareil électrique de cuisson (1) selon les revendications précédentes, **caractérisé en ce que** des ouvertures (18) sont prévues sur l'enveloppe (19a) de la partie basse (12a) en vis à vis des logements (13).

8. Appareil électrique de cuisson (1) selon les revendications 6 et 7, **caractérisé en ce que** l'enveloppe (19a) de la partie basse (12a) est conçue avec une matière formant un aimant permanent.

9. Appareil électrique de cuisson (1) selon l'une des revendications précédentes, **caractérisé en ce que** le plateau de récupération (10) est conçu avec une matière formant un aimant permanent.

10. Appareil électrique de cuisson (1) selon l'une des revendications précédentes, **caractérisé en ce que** le plateau de récupération (10) est conçu dans une matière plastique et comporte des éléments aimantés.

11. Appareil électrique de cuisson (1) selon l'une des revendications précédente, **caractérisé en ce que** le support (2) comporte un dispositif de maintien du plateau récupérateur (10) dans une position sensiblement horizontale lors d'une utilisation dudit appareil électrique de cuisson (1).

12. Appareil électrique de cuisson (1) selon la revendication 11, **caractérisé en ce que** ce dispositif comprend au moins une protubérance (21) positionnée sur le socle (11) et pouvant comporter des aimants permanents.

13. Appareil électrique de cuisson (1) selon l'une des revendications précédentes, **caractérisé en ce que** le plateau de récupération (10) a des bords extérieurs sensiblement plus hauts que le centre du plateau (10).

14. Appareil électrique de cuisson (1) selon la revendication 11, **caractérisé en ce que** le dispositif de maintien du plateau récupérateur (10) est composé d'une ou plusieurs saillies (20) qui sont positionnées sur les faces intérieures des pieds (9a, 9b) et qui s'étendent préférentiellement de part et d'autre du pied (9a) de facon sensiblement horizontale.

## Patentansprüche

1. Elektrisches Kochgerät (1), das Folgendes umfasst: einerseits einen Träger (2), ein auf dem Träger (2) entweder in einer Lager- oder einer Betriebsstellung montiertes Waffeleisen (3), wobei das Waffeleisen eine obere Platte (4) und eine untere Platte (5) aufweist, die über ein Scharnier (6) zwischen einer geöffneten und einer geschlossenen Position gelenkig miteinander verbunden sind, sowie eine Auffangschale (10) für Rückstände und andererseits Haltemittel für die Auffangschale (10) an der unteren Platte (5), wenn sich das Waffeleisen in der Lagerstellung an seinem Träger befindet, **dadurch gekennzeichnet, dass** es sich bei den Haltemitteln um magnetische Mittel (14) handelt, die eine ausreichende Rückstellkraft erzeugen, um die Auffangschale (10) an der unteren Platte (5) des Waffeleisens (3) zu halten.

2. Elektrisches Kochgerät (1) nach Anspruch 1, **dadurch gekennzeichnet, dass** die magnetischen Mittel (14) mindestens zwei Dauermagnetelemente umfassen.

3. Elektrisches Kochgerät (1) nach Anspruch 2, **dadurch gekennzeichnet, dass** es sich bei den Magnetelementen entweder um natürliche Dauermagneten oder um künstliche Dauermagneten wie mit Barium gehärteten Stahl handelt.

4. Elektrisches Kochgerät (1) nach den Ansprüchen 2 und 3, **dadurch gekennzeichnet, dass** mindestens eines der beiden Dauermagnetelemente im unteren Teil (12a) der unteren Platte (5) des Waffeleisens (3) angeordnet ist.

5. Elektrisches Kochgerät (1) nach dem vorhergehenden Anspruch, **dadurch gekennzeichnet, dass** eines oder mehrere der im unteren Teil (12a) der unteren Platte (5) des Waffeleisens (3) angeordneten Magnetelemente in den an dem genannten unteren Teil (12a) der unteren Platte (5) des Waffeleisens (3) vorgesehenen Aussparungen (13) angeordnet sind, sodass die Dipolmomente (16) der Dauermagnetelemente, sobald letztere in den Aussparungen (13) angeordnet wurden, im Wesentlichen parallel zur Normalen (17) zur Ebene des unteren Teils (12a) der unteren Platte (5) des Waffeleisens (3) ausgerichtet sind.

6. Elektrisches Kochgerät (1) nach dem vorhergehenden Anspruch, **dadurch gekennzeichnet, dass** die in den Aussparungen (13) angeordneten Dauermagnetelemente von einer Ummantelung (19a) des unteren Teils (12a) abgedeckt werden.

7. Elektrisches Kochgerät (1) nach einem der vorhergehenden Ansprüchen, **dadurch gekennzeichnet, dass** in der Ummantelung (19a) des unteren Teils (12a) gegenüber den Aussparungen (13) Öffnungen (18) vorgesehen sind.

8. Elektrisches Kochgerät (1) nach den Ansprüchen 6 und 7, **dadurch gekennzeichnet, dass** die Ummantelung (19a) des unteren Teils (12a) aus einem dauermagnetischen Material besteht.

9. Elektrisches Kochgerät (1) nach einem der vorhergehenden Ansprüche, **dadurch gekennzeichnet, dass** die Auffangschale (10) aus einem Material besteht, das einen Dauermagneten bildet.

10. Elektrisches Kochgerät (1) nach einem der vorhergehenden Ansprüche, **dadurch gekennzeichnet, dass** die Auffangschale (10) aus einem Kunststoff besteht und Magnetelemente umfasst.

11. Elektrisches Kochgerät (1) nach einem der vorhergehenden Ansprüche, **dadurch gekennzeichnet, dass** der Träger (2) eine Haltevorrichtung für die Auffangschale (10) umfasst, um das genannte Kochgerät (1) während seines Betriebs in einer im Wesentlichen waagerechten Position zu halten.

12. Elektrisches Kochgerät (1) nach Anspruch 11, **dadurch gekennzeichnet, dass** das Gerät mindestens eine Erhöhung (21) umfasst, die am Sockel (11) angeordnet ist und mit Dauermagneten versehen sein kann.

13. Elektrisches Kochgerät (1) nach einem der vorhergehenden Ansprüche, **dadurch gekennzeichnet, dass** die Auffangschale (10) äußere Ränder aufweist, die deutlich höher als die Mitte der Schale (10) sind.

14. Elektrisches Kochgerät (1) nach Anspruch 11, **dadurch gekennzeichnet, dass** die Haltevorrichtung der Auffangschale (10) einen oder mehrere Vorsprünge (20) umfasst, die an den Innenseiten der Füße (9a, 9b) angeordnet sind und vorzugsweise von einer Seite des Fußes (9a) zur anderen im Wesentlichen horizontal verlaufen.

## Claims

1. Electrical cooking appliance (1) comprising firstly a support (2), a waffle iron device (3) mounted on the support (2) according to at least one storage position and one operating position, the waffle iron device comprises an upper panel (4) and a lower panel (5) hinged together by a hinge (6) between an open position and a closed position, a residue collection tray (10) and secondly means for holding the collection tray (10) on the lower panel (5) when the waffle iron device is in storage position on its support, **characterised in that** the holding means are magnetic means (14) generating a return force sufficient to hold the collection tray (10) on the lower panel (5) of the waffle iron device (3).

2. Electrical cooking appliance (1) according to claim 1, **characterised in that** the magnetic means (14) comprise at least two permanent magnetised elements.

3. Electrical cooking appliance (1) according to claim 2, **characterised in that** the magnetised elements are either natural permanent magnets or artificial permanent magnets such as hardened barium steel.

4. Electrical cooking appliance (1) according to claims 2 and 3, **characterised in that** at least one of the two permanent magnetised elements is arranged in the lower part (12a) of the lower panel (5) of the waffle iron device (3).

5. Electrical cooking appliance (1) according to the preceding claim, **characterised in that** one or more magnetised elements arranged in the lower part (12a) of the lower panel (5) of the waffle iron device (3) are arranged in housings (13) formed in said lower part (12a) of the lower panel (5) of the waffle iron device (3) such that, once the permanent magnetised elements are arranged in the housings (13), their dipole moments (16) are substantially parallel to the normal (17) to the plane of the lower part (12a) of the lower panel (5) of the waffle iron device (3).

6. Electrical cooking appliance (1) according to the preceding claim, **characterised in that** the permanent magnetised elements arranged in housing (13) are covered by a casing (19a) of the lower part (12a).

7. Electrical cooking appliance (1) according to the preceding claims, **characterised in that** openings (18) are provided on the casing (19a) of the lower part (12a) opposite the housings (13).

8. Electrical cooking appliance (1) according to claims 6 and 7, **characterised in that** the casing (19a) of the lower part (12a) is designed with a material forming a permanent magnet.

9. Electrical cooking appliance (1) according to one of the preceding claims, **characterised in that** the collection tray (10) is designed with a material forming a permanent magnet.

10. Electrical cooking appliance (1) according to one of the preceding claims, **characterised in that** the collection tray (10) is designed in a plastic material and comprises magnetised elements.

11. Electrical cooking appliance (1) according to one of the preceding claims, **characterised in that** the support (2) comprises a device for holding the collection tray (10) in a substantially horizontal position when said electrical cooking appliance (1) is in use.

12. Electrical cooking appliance (1) according to claim 11, **characterised in that** this device comprises at least one protuberance (21) positioned on the base (11) and which may contain permanent magnets.

13. Electrical cooking appliance (1) according to one of the preceding claims, **characterised in that** the outer edges of the collection tray (10) are substantially higher than the centre of the tray (10).

14. Electrical cooking appliance (1) according to claim 11, **characterised in that** the device for holding the collection tray (10) comprises one or more projections (20) which are positioned on the inner sides of the feet (9a, 9b) and which preferably extend substantially horizontally on either side of the foot (9a).
